Europäisches Patentamt

European Patent Office

Office européen des brevets

(11) Veröffentlichungsnummer: **0 180 156**
A2

# EUROPÄISCHE PATENTANMELDUNG

(21) Anmeldenummer: 85113583.0

(22) Anmeldetag: 25.10.85

(51) Int. Cl.⁴: **A 01 B 49/02,** A 01 B 35/30

(30) Priorität: 29.10.84 DE 3439516

(43) Veröffentlichungstag der Anmeldung: 07.05.86
Patentblatt 86/19

(84) Benannte Vertragsstaaten: AT CH DE FR GB IT LI NL SE

(71) Anmelder: Weichel, Ernst, Bahnhofstrasse 1,
D-7326 Heiningen (DE)

(72) Erfinder: Weichel, Ernst, Bahnhofstrasse 1,
D-7326 Heiningen (DE)

(54) Gerätekombination zur Bodenlockerung Saatbettherrichtung und/oder Bestellung.

(57) Eine Gerätekombination zur Bodenlockerung sowie Saatbettherrichtung und Bestellung besteht aus Haltestielen (3) für Lockerungsschare (2), die an einem Rahmen (4) angebracht sind sowie weiteren nachgeordneten Geräten wie Fräse (6) und Walze (10). Die Fräse mit ihren rotierenden Werkzeugen (6) sitzt ebenfalls an einem Rahmen (8), der aus zwei integrierten Hohlprofilen (47, 204) gebildet ist und Haltevorrichtungen (207) sowie weitere Hülsen (208) für die Stiele (3) von Tieflockerungsscharen (2) aufweist.

ERNST    W E I C H E L

Bahnhofstr. 1

7326  Heiningen

0180156

Heiningen, 23.10.1985

Gerätekombination zur Bodenlockerung,
Saatbettherrichtung und/oder Bestellung

Die Erfindung bezieht sich auf eine Gerätekombination für Traktoren zur Bodenlockerung, Saatbettherrichtung und Bestellung mit wenigstens einem an den Schlepperkraftheber ankuppelbaren Arbeitsgerät, an dessen quer zur Fahrtrichtung angeordnetem Rahmen Haltestiele für Lockerungsschare angeordnet und an das wenigstens zeitweise ein weiteres Arbeitsgerät ankuppelbar ist, an dessen sich quer zur Fahrtrichtung erstreckendem Rahmen wenigstens ein Getriebe und wenigstens ein in seitlichen Lagerschilden gelagerter, motorisch angetriebener Werkzeugträger mit rotierenden Zinken oder Fräsmessern zur Krümelung der obersten Bodenschicht und vorzugsweise auch eine Krümel- oder Packerwalze und/oder eine Aufbau- oder Anhängedrillmaschine ankuppelbar ist, bei welchem Haltestiele für die Werkzeuge zur Bodenlockerung sowohl am Rahmen des  ersten Arbeitsgerätes, als auch am Rahmen des zweiten Arbeitsgerätes anbringbar sind, wobei die am zweiten Rahmen angeordneten Haltestiele auf Lücke zu den am ersten Rahmen angeordneten Haltestielen und in Fahrtrichtung hinter diesen gestaffelt angeordnet sind gemäß Anmeldung P 34 24 250.3.

Der Erfindung liegt die Aufgabe zugrunde, die Nachteile einiger Ausführungsbeispiele der Stammanmeldung zu beseitigen. Insbesondere sollen diese noch vielseitiger verwendbar und so herstellbar sein, daß das Gewicht des zweiten Arbeitsgerätes, insbesondere wenn es separat eingesetzt wird, so niedrig wie möglich gehalten werden kann, und daß auch die Befestigung der Haltestiele an der Rückseite des Rahmens des zweiten Arbeitsgerätes einfacher wird.

Die Erfindung löst diese Aufgabe dadurch, daß der quer zur Fahrtrichtung verlaufende Rahmen des zweiten Arbeitsgerätes wenigstens einen in diesen Rahmen integrierten Hohlträger aufweist, an dem Haltevorrichtungen für Stielhülsen anbringbar sind, in denen entweder senkrechte oder der Oberteil nach vorne ragender und teilweise zwischen den Bewegungsbahnen der Zinken oder Fräsmesser angeordnete Haltestiele wahlweise anbringbar sind, und daß das zusätzliche Rahmenrohr zur Anbringung von Haltestielen an der Vorderseite des zweiten Arbeitsgerätes als mit diesem kuppelbarer Vorsatz-Schichtengrubber ausgebildet ist, der sowohl in räumlich sehr eng gebauter Kombination mit dem zweiten Arbeitsgerät, als auch für sich allein, oder in Kombination mit anderen Arbeitsgeräten, z.B. einer Packerwalze, am Schlepper in
üblicher Weise ankuppelbar ist.

Zwei Ausführungsbeispiele werden in teilweise
geschnittenen Seitenansichten in der Weise
schematisch dargestellt, daß Merkmale, die in
einem Ausführungsbeispiel gezeichnet oder im
Zusammenhang mit diesem beschrieben sind, in
sinngemäßer Weise auf das andere Ausführungsbeispiel oder auf ein solches der Stammanmeldung übertragbar sein sollen, und daß die
Draufsichten und/oder die perspektivischen
Zeichnungen der Stammanmeldung teilweise auch
zur Erläuterung der Seitenansichten herangezogen werden können.

Figur 1 zeigt eine Gerätekombination, bestehend aus dem Vorsatz-Schichtengrubber und einem
an diesem in sehr geringem Abstand höhenverstellbar und feststellbar angebrachten zweiten
Arbeitsgerät zur Saatbettherrichtung, mit sowohl an dessen Vorderseite, als auch an dessen
Rückseite anbringbaren, senkrechten oder gekröpften Haltestielen und zusätzlicher Packerwalze.

Figur 2 zeigt das Gerät zur Saatbettherrichtung mit einem lediglich zwischen dem Anbaubock angebrachten kurzen Tragrohr für Haltevorrichtungen von wenigen höhenverstellbaren
Stielen direkt an den Schlepper angebaut.

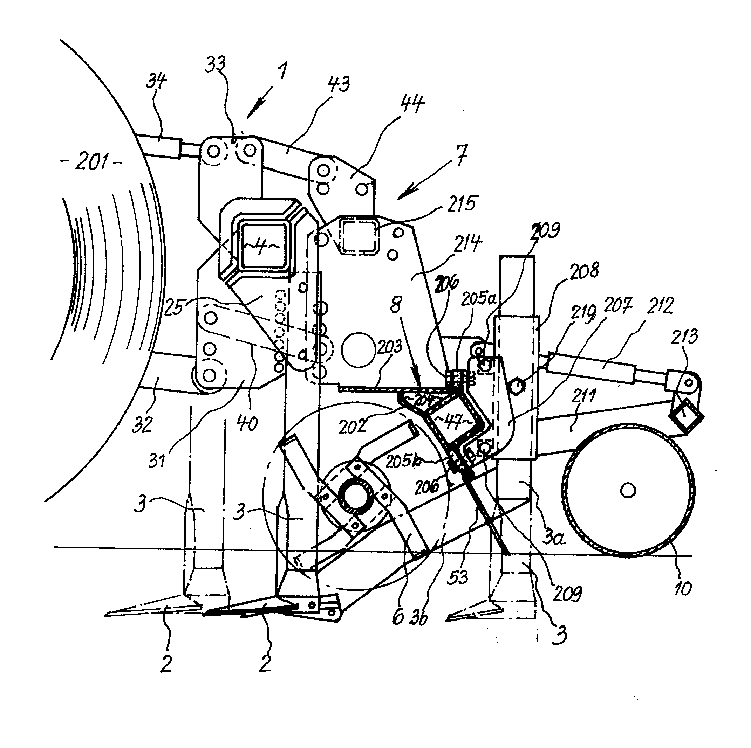

Wie Figur 1 zeigt, ist das erste Arbeitsgerät über dessen nur wenig über das Tragrohr 4 nach vorne überstehenden Oberlenker-Konsolen 33 und die Unterlenker-Konsolen 31 am Kraftheber 34, 32 des Schleppers 201 lösbar angekuppelt. Die Oberlenker-Konsolen 33 und die Unterlenker-Konsolen 31 sind, wie in der Stammanmeldung beschrieben, an dem quer zur Fahrtrichtung verlaufenden Tragrohr 4 des Arbeitsgerätes 1 angebracht, an dem mittels der Stielhalter 25 Haltestiele 3 für Lockerungsschare 2 sowohl an der Rückseite des Tragrohres 4 (durchgezogen gezeichnet) und zwischen den Bewegungsbahnen der motorisch angetriebenen Werkzeuge 6 des Arbeitsgerätes 7, als auch an der Vorderseite (strichpunktiert gezeichnet) und damit vor den Bewegungsbahnen der Werkzeuge 6 anbringbar sind.

An der Oberlenker-Konsole 33 ist ein nach hinten ragender, kurzer Oberlenker 43 und an den Unterlenker-Konsolen 31 sind nach hinten ragende kurze Unterlenker 40 angelenkt, an dessen freien Enden die Oberlenker-Konsole 44 des Arbeitsgerätes 7 bzw. die Kupplungsvorrichtung für die Unterlenker dieses Arbeitsgerätes lösbar, höhenverstellbar und abnehmbar befestigt sind.

Erfindungsgemäß weist der Rahmen 8 des zweiten Arbeitsgerätes 7 wenigstens einen integrierten geschlossenen Hohlträger 47 auf, der in dem gezeichneten Ausführungsbeispiel als Quadratrohr, das auf die Spitze gestellt ist, ausgeführt und mit einem Zusatzprofil 202 verstärkt ist. Das Profil 202 bildet mit einer Seite des Hohlträgers 47 und einem Teil der als Abdeckung ausgebildeten Platte 203 des Rahmens 8 einen weiteren Hohlträger 204. An dem Hohlträger 47 sind Klemmleisten 205a und 205b angebracht, an denen mit Schrauben 206 Rohrschellen 207 mit Rippen 214 befestigt sind, an welchen Stielhülsen 208 mittels Hülsenzapfen 209 und einem Stecker 210 in bekannter Weise leicht anbringbar und lösbar sind. In den Stielhülsen 208 ist sowohl der Oberteil der Stiele 3a als auch der STiele 3b höhenverstellbar geführt und durch die Stellschraube 210 in verschiedenen Lagen feststellbar.

Am Rahmen 8 des zweiten Arbeitsgerätes ist über Schwingen 211 und durch Spannschlösser 212 höhenverstellbar eine nur schematisch angedeutete Walze 10 angeordnet. Die beiden Schwingen 211 sind mit einem Querträger 213 verbunden, an dem entweder starre, an sich bekannte, Abstreifer oder rotierende, mechanisch oder hydraulisch angetriebene Abstreifer (nicht gezeichnet) angebracht werden können.

Auf diese Weise ist es möglich, die etwa hinter dem Rahmen 8 des Arbeitsgerätes 7 zur Krümelung des Bodens an der Rückseite anbringbaren Haltestiele 3a, 3b günstiger zu befestigen, als dies bei dem in die Ausführungsbeispiele der Stammanmeldung eingezeichneten, mit den äußeren Lagerschilden fest verbundenen Tragrohr möglich wäre. Dies ist darauf zurückzuführen, daß dieses obere Tragrohr die Verwendung aufwendiger gebauter "auskragender" Stielhalter erfordert, die zu größeren Hebelarmen zwischen Schar und Stielhalter führen.

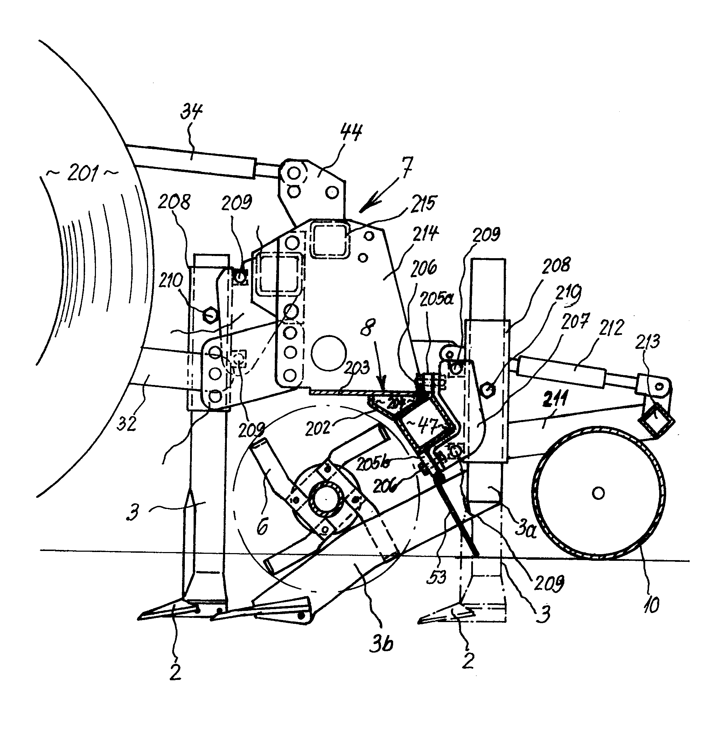

Wenn, wie in Figur 2 dargestellt, das Arbeitsgerät 7 direkt am Kraftheber 34, 32 des Schleppers 201 angekuppelt wird, können senkrechte oder nach vorne abgebogene Haltestiele 3a, 3b günstig an dem niedrig liegenden Tragrohr 47 angebracht werden.

Für den Fall, daß auch an der Vorderseite bzw. vor den Bewegungsbahnen der Messer 6 Stielhülsen 209 angebracht werden sollen, sind die Seitenplatten 214 des Anbaubockes 44 außer durch das obere Zwischenrohr 215 auch durch ein zusätzliches stärkeres Zwischenrohr 216 verbunden, das evtl. seitlich über die Seitenplatten 214 hinausragen kann, um beispielsweise ein bis drei Haltestiele über entsprechende Haltevorrichtungen für Stielhülsen 209 höhenverstellbar auch an der Vorderseite des Gerätes 7 anbringen zu können.

In diesem Fall kann der Unterlenker 32 des Schleppers an Vorsatzkonsolen 217, die in die Steckbohrungen 218 der Seitenplatten 214 gesteckt werden und nach

0180156

vorne ragen, eingehängt werden, um einen etwa erforderlichen Abstand zwischen den Haltestielen 3a und den Schlepperhinterrädern zu ermöglichen. Das hat den Vorteil, in in beiden Fällen das Arbeitsgerät 7 zur Krümelung des Bodens mit einer (nicht gezeichneten) Gelenkwelle etwa derselben Länge angetrieben werden kann.

Da die Erfindung eine äußerst kurze Bauweise verschiedenartiger Gerätekombinationen zur Bodenlockerung, Saatbettherrichtung und Bestellung und die Anordnung von Haltestielen für Lockerungsschare sowohl an der Vorderseite, als auch an der Rückseite des ersten Tragrahmens, als auch an der Vorderseite und an der Rückseite des Rahmens des Gerätes zur Saatbettherrichtung und auch die gleichzeitige Verwendung gerader und gebogener Haltestiele 3a, 3b ermöglicht, ohne daß der Rahmen 8 dieses Gerätes ein zu hohes Gewicht aufweist, falls er für sich allein oder ohne an ihm angebrachte Haltestiele für Lockerungsschare eingesetzt wird, stellt die Erfindung einen wesentlichen Fortschritt dar.

ERNST   W E I C H E L
Bahnhofstr. 1
7326  Heiningen

Heiningen,  23.10.85

## P a t e n t a n s p r ü c h e

1. Gerätekombination für Traktoren zur Bodenlockerung, Saatbettherrichtung und Bestellung, mit wenigstens einem an den Schlepperkraftheber ankuppelbaren Arbeitsgerät, an dessen quer zur Fahrtrichtung angeordnetem Rahmen Haltestiele für Lockerungsschare angeordnet und an das wenigstens zeitweise ein weiteres Arbeitsgerät ankuppelbar ist, an dessen sich quer zur Fahrtrichtung erstreckendem Rahmen wenigstens ein Getriebe und wenigstens ein in seitlichen Lagerschilden gelagerter, motorisch angetriebener Werkzeugträger mit rotierenden Werkzeugen zur Krümelung der obersten Bodenschicht und vorzugsweise auch eine Krümelwalze oder Anhängedrillmaschine ankuppelbar ist, bei welchem Haltestiele für die Werkzeuge zur Bodenlockerung sowohl am Rahmen des ersten Arbeitsgerätes, als auch am Rahmen des zweiten Arbeitsgerätes anbringbar sind, gemäß Anmeldung P 34 24 250.3 dadurch gekennzeichnet, daß das zweite Arbeitsgerät (7) wenigstens einen in dessen Rahmen (8) integrierten Hohlträger (47, 204) aufweist, an dem Haltevorrichtungen (205, 206, 207) für Stielhülsen (208) anbringbar sind, in denen entweder senkrechte oder der Oberteil nach vorne ragender und teilweise zwischen den Bewegungsbahnen der Werkzeuge (6) angeordneten Haltestiele (3a, 3b) wahlweise anbringbar sind, und daß das Rahmenrohr (4) zur Anbringung von Haltestielen (3a) an der Vorderseite des zweiten Arbeitsgerätes (7) als mit diesem kuppelbarer Vorsatz-Schichtengrubber (1) ausgebildet ist, der sowohl in räumlich sehr eng gebauter Kombination mit dem zweiten Arbeitsgerät (7) , als auch für sich allein, oder in Kombination mit anderen Arbeitsgeräten, z.B. einer Packerwalze, am Schlepper in üblicher Weise ankuppelbar ist.

2. Gerätekombination nach Anspruch 1, dadurch gekennzeichnet, daß ein Teil der Außenwand des Hohlträgers (47) als Begrenzungswand eines zweiten benachbarten Hohlträgers (204) dient.

0180156

3. Gerätekombination nach Anspruch 1,
   dadurch gekennzeichnet,
   daß die in Fahrtrichtung betrachtete Ausdehnung der Oberlenker-Konsolen und den
   Unterlenker-Konsolen (33, 31) im Bereich vor
   der Vorderseite des Tragrohres (4)
   kleiner ist als der Durchmesser dieses
   Tragrohres (4) .

4. Gerätekombination nach Anspruch 1,
   dadurch gekennzeichnet,
   daß an der Oberlenker-Konsole (33) und
   der Unterlenker-Konsole (32) nach hinten ragende Oberlenker (43) und Unterlenker (40) verschiedener Länge zur
   starren oder höhenbeweglichen Anhängung des zweiten Arbeitsgerätes (7)
   anbringbar sind.

5. Gerätekombination nach einem der vorhergehenden Ansprüch,
   dadurch gekennzeichnet,
   daß an der Rückseite des Hohlträgers (47
   204) Haltevorrichtungen bzw. Stielhülsen (208) anbringbar sind, in denen sowohl nur senkrechte Haltestiele, als
   auch nur nach vorne gebogene Haltestiele
   mit senkrechtem Oberteil oder vorzugsweise im Wechsel zueinander senkrechte Haltestiele und nach vorne gebogene Haltestiele mit senkrechtem Oberteil anbringbar sind.

6. Gerätekombination nach einem der vorhergehenden Ansprüche,
   dadurch gekennzeichnet,
   daß das Arbeitsgerät (7) wahlweise auch

0180156

- 4 -

direkt an den Oberlenkern (34) und
Unterlenkern (32) des Traktors (201)
ankuppelbar ist und Haltestiele (3)
an zwischen den seitlichen Tragplatten (214) des Anbaubockes (44)
angeordneten Zwischenrohren (216)
lösbar und abnehmbar anbringbar sind.

Fig. 1

Fig. 2